# EUROPEAN PATENT APPLICATION

(11) **EP 4 280 741 A1**
(43) Date of publication of application: **22.11.2023**
(21) Application number: 21918660.8
(22) Date of filing: 17.01.2021
(51) Int. Cl.: H04W 72/04, H04B 7/0408

(54) **METHOD FOR CONFIGURING TCI STATE IN MULTI-TRP SYSTEM**

(71) Applicant: JRD Communication (Shenzhen) Ltd, Shenzhen, Guangdong 518052 (CN)
(72) Inventor: LI, Tian, Shenzhen, Guangdong 518052 (CN); SHENG, Jia, Shenzhen, Guangdong 518052 (CN)
(74) Representative: Petraz, Gilberto Luigi
(86) International application number: PCT/CN2021/072354
(87) International publication number: WO 2022/151457

(57) **Abstract**

Provided is a method for configuring TCI state in a multi-TRP system. The method comprises: acquiring PDCCH-related information according to a monitored search space and a corresponding control resource set (CORESET), wherein the CORESET is configured with one activated transmission configuration indicator (TCI) state or two active TCI states, and each active TCI state comprises a transmission beam-related parameter; and a UE receiving a PDCCH by using a reception beam corresponding to the TCI state. By means of the method, a UE can receive a PDCCH by flexibly using a reception beam corresponding to one active TCI state or reception beams corresponding to two active TCI states, depending on an implementation situation.

## Description

### BACKGROUND OF DISCLOSURE

### Technical Field

The disclosed embodiments of the present invention relate to the field of communication technologies, and more particularly, to a method and user equipment for configuring a transmission configuration indicator (TCI) state in a multi-transmission/reception point (TRP) system.

### Description of Related Art

User Equipment (UE) needs to know the location of Physical Downlink Control Channel (PDCCH) in the frequency domain and time domain to successfully decode the PDCCH. In New Radio (NR) system, the frequency domain resource information of the PDCCH and the number of orthogonal frequency division multiplexing (OFDM) symbols occupied in the time domain are encapsulated in a control resource set (CORESET). The PDCCH starting OFDM symbol, monitoring period, associated CORESET and other information are encapsulated in a search space (SS). After the UE determines the candidate time-frequency positions of the PDCCH according to the search space and the CORESET configuration, these candidate resources are called PDCCH candidates. Polar decoding and cyclic redundancy check (CRC) are performed on each candidate PDCCH. When the CRC check passes, it means that the current candidate PDCCH is successfully demodulated.

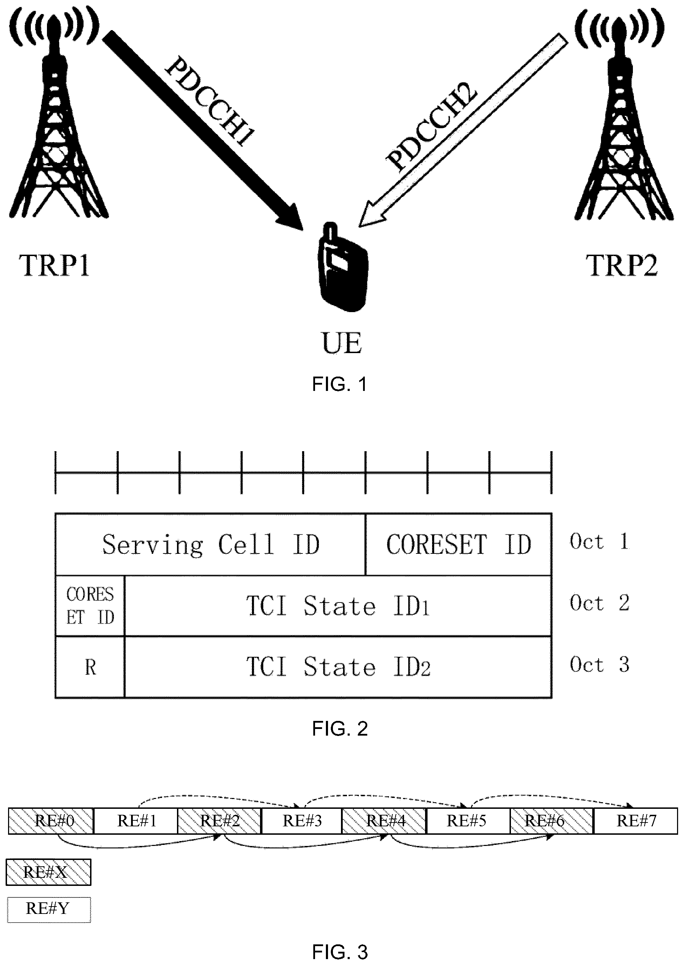

Since the PDCCH channel from the transmission and reception node (TRP: Transmission/Reception Point) to the UE may be blocked, it is necessary to enhance the reliability of the PDCCH channel. As shown in FIG. 1, multiple PDCCHs (i.e., PDCCH1 and PDCCH2) are transmitted from multiple TRPs to one UE, these PDCCHs are transmitted using different beams, and indicate the same resource allocation information for scheduling a physical downlink shared channel (PDSCH)/physical uplink shared channel (PUSCH), etc. Reliability of PDCCH can be enhanced through multi-TRP system transmission.

Enhancement of PDCCH transmission in multi-TRP systems under SFN (Non-Single Frequency Network) supports the association of one PDCCH candidate in one search space set with two transmission configuration indicator (TCI) states of CORESET, but only one TCI is configured in one CORESET in the current protocol state, and a PDCCH candidate is associated with only one TCI state. Therefore, when a CORESET configures two TCI states, it is necessary to propose a method to define the configuration and use of the two TCI states.

### SUMMARY OF THE INVENTION

According to an embodiment of the present invention, the present invention provides a method for configuring TCI state in a multi-TRP system to solve the aboveidentified technical problem.

According to a first aspect of the present application, a method for configuring TCI state in a multi-TRP system is provided. The method includes acquiring a PDCCH according to a monitored search space and a corresponding control resource set (CORESET), wherein the CORESET configures one active TCI state or two active TCI states, each active TCI state includes parameters related to a transmission beam, and a user equipment (UE) receives the PDCCH through a receiving beam corresponding to the TCI state.

According to another aspect of the present application, a user equipment is provided. The user equipment includes a processor and a communication circuit. The processor is connected to the communication circuit. The processor is configured to execute the configuration method according to the first aspect.

According to yet another aspect of the present application, a user equipment is provided. The user equipment stores instructions. The instructions, when being executed, implement the configuration method described in the first aspect.

The beneficial effects of the present application are: the present application receives the PDCCH according to information of the monitored search space and the corresponding control resource set (CORESET) configuration. Each CORESET can be configured with one active TCI state or two active TCI states. Each active TCI state includes parameters related to the transmission beam, so that the UE can flexibly use the receiving beam corresponding to one active TCI state or the receiving beam corresponding to two active TCI states to receive the PDCCH according to the actual situation.

### BRIEF DESCRIPTION OF DRAWINGS

In order to illustrate the technical solutions in the embodiments of the present application more clearly, the following briefly introduces the drawings that are used in the description of the embodiments. Obviously, the drawings in the following description are only some embodiments of the present application. For those of ordinary skill in the art, other drawings can also be obtained from these drawings without creative effort. In particular:
FIG. 1 is a schematic diagram showing the transmission principle of the PDCCH channel in a multi-TRP system;
FIG. 2 is a schematic diagram showing the definition of a medium access control (MAC) control element (CE) field according to an embodiment of the method for configuring TCI state of the present application;
FIG. 3 is a schematic diagram showing receiving a resource element grouping according to an embodiment of the method for configuring TCI state of the present application;
FIG. 4 is a schematic diagram of receiving a resource element grouping according to another embodiment of the method for configuring TCI state of the present application;
FIG. 5 is a schematic structural diagram of a user equipment according to an embodiment of a method for configuring TCI state of the present application;
FIG. 6 is a schematic diagram showing a storage of a user equipment performing an embodiment of a method for configuring TCI state according to the present application.

### DETAILED DESCRIPTION OF EMBODIMENTS

The technical solutions in the embodiments of the present application will be clearly and completely described below with reference to the drawings in the embodiments of the present application. Obviously, the described embodiments are only a part of the embodiments of the present application, but not all of the embodiments. Based on the embodiments in the present application, all other embodiments obtained by persons of ordinary skill in the art without creative efforts shall fall within the protection scope of the present application.

The present application provides a method for configuring TCI state in a multi-TRP system. This configuration method includes:

obtaining a physical downlink control channel (PDCCH) related information according to a monitored search space and a corresponding control resource set (CORESET), wherein the CORESET configures one active TCI state or two active TCI states, and each of the active TCI states includes transmission beam related information parameter; and a user equipment (UE) receiving a PDCCH through a receiving beam corresponding to the TCI state.

CORESET includes information such as frequency domain resource information of PDCCH and the number of occupied OFDM symbols of the PDCCH in time domain. The search space includes PDCCH starting OFDM symbol, monitoring period, associated CORESET and other information. CORESET includes PDCCH frequency domain resource information and information regarding the number of occupied OFDM symbols of PDCCH in time domain. The UE obtains search space information and CORESET information through Radio Resource Control (RRC). Further, PDCCH related information is acquired through the search space information and configuration of the CORESET.

In particular, the CORESET also includes the configuration of TCI state. A base station configures a series of TCI states for a CORESET through the parameter tci-States-ToAddModList under the high-level parameter ControlResourceSet. A medium access control (MAC) control element (CE) indicating the UE-level PDCCH TCI state activates a TCI state specifically used by this CORESET. For different CORESETs configured by the base station, some CORESETs are configured to activate one TCI state. Other CORESETs are configured to activate two TCI states. Each active TCI state includes parameters related to the transmission beam, such as specific direction parameters of the transmission beam. The UE can receive the PDCCH by using a receiving beam corresponding to the TCI state.

In one embodiment, CORESET configures one active TCI state or two active TCI states, which are respectively indicated by different MAC CEs.

Specifically, the original MAC CE format can be used to indicate a TCI state of a CORESET, and a new MAC CE can be defined to indicate that a CORESET activates two TCI states. Therefore, when a CORESET only needs to activate one TCI state, the original MAC CE can be used to indicate so. When a CORESET needs to activate two TCI states, the newly defined MAC CE is used to indicate so. Since different MAC CEs have different signaling overheads, different MAC CEs apply to different scenarios, which can save signaling overheads.

As shown in FIG. 2, in this new MAC CE, a field Serving Cell ID is used to indicate a serving cell that uses this MAC CE, and the length of this field is 5 bits. The field CORESET ID represents a control resource set identifier, which is indicated by the high-level parameter controlResourceSetld, indicating the CORESET that uses this TCI state. The length of this field is 4 bits. If the value of this field is 0. This CORESET is configured by the high-level parameter controlResourceSetZero. The field TCI State ID1 and TCI State ID2 represent the two TCI states activated by this CORESET, which are indicated by the high-level parameter TCI-Stateld. The length of either of these two fields is 7 bits. If the field CORESET ID value is 0, these two TCI states are the two TCI states in the first 64 TCI states of the parameters tci-States-ToAddModList and tci-States-ToReleaseList under the high-level parameter PDSCH-Config. If the field CORESET ID value is not 0, these two TCI states are two TCI states in the following parameters tci-StatesPDCCH-ToAddList and tci-StatesPDCCH-ToReleaseList under the high-level parameter controlResourceSet.

In another example, the one active TCI state or the two active TCI states configured by the CORESET is indicated using the same MAC CE.

Specifically, a new MAC CE can be defined, and one bit of the MAC CE can be used to indicate that the MAC CE is used to activate a TCI state or two TCI states of a CORESET. For scheduling, this is relatively simple, since there is no need to distinguish different MAC CEs for activations of different numbers of TCI states.

In one embodiment, this newly defined MAC can refer to the field definition shown in FIG. 2, and the reserved field R can be used to indicate whether the MAC CE is for activating one TCI state or two TCI states of one CORESET, and other fields can be used in the same way as above. The length of the reserved field R is 1 bit, which is used to indicate that the current MAC CE is used to activate one TCI state or two TCI states of the CORESET. Specifically, if the value of the field R is 0, it means that the current MAC CE is used to activate one TCI state of the CORESET. If the value of field R is 1, it means that the current MAC CE is used to activate the two TCI states of this CORESET, and vice versa.

When the MAC CE is for activating a TCI state of the CORESET, the TCI state indicated in the field TCI State ID1 is used. When the MAC CE is for activating two TCI states of the CORESET, the MAC CE uses two fields to indicate two TCI states, namely: TCI states indicated by fields TCI State ID1 and TCI State ID2. The index values of these two TCI states are indicated by the high-level parameter TCI-Stateld. In particular, if the field CORESET ID value is 0, the TCI state indicated by TCI State ID1 and TCI State ID2 is the TCI state in the first 64 TCI states of the parameters tci-States-ToAddModList and tci-States-ToReleaseList under the high-level parameter PDSCH-Config., if the field CORESET ID value is not 0, the TCI state indicated by TCI State ID1 and TCI State ID2 is a TCI state among 64 TCI states in the parameters tci-StatesPDCCH-ToAddList and tci-StatesPDCCH-ToReleaseList under the high-level parameter controlResourceSet.

As mentioned above, when CORESET configures two active TCI states, the UE receives the PDCCH through the receiving beam corresponding to the TCI states and further includes:
S110: dividing frequency domain resources of a PDCCH candidate into two groups based on resource elements, which are a first group of PDCCH candidate resources and a second group of PDCCH candidate resources.

The UE receives PDCCH candidates in the frequency domain. A PDCCH candidate is composed of several frequency domain resource elements (i.e., REG/REG bundle/CCE/RB). A frequency domain resource element can be a resource element group (REG), REG bundle, control channel element (CCE), resource block (RB). The frequency domain resources of the PDCCH candidate can be divided into two groups according to parity of the resource element index values, wherein those frequency domain resources of the PDCCH candidate with odd-numbered resource element index values are grouped into the first group of PDCCH candidate resources, and those frequency domain resources of the PDCCH candidate with even-numbered resource element index values are grouped into the second group of PDCCH candidate resources Of course, as an alternative, those frequency domain resources of the PDCCH candidate with even-numbered resource element index values are grouped into the first group of PDCCH candidate resources, and those frequency domain resources of the PDCCH candidate with odd-numbered resource element index values are grouped into the second group of PDCCH candidate resources The frequency domain resources of the PDCCH candidate can also be divided into two groups according to the size of the resource element index values, wherein those frequency domain resources of the PDCCH candidate of a first half of the resource element index values are grouped into the first group of PDCCH candidate resources, and those frequency domain resources of the PDCCH candidate of a second half of the resource element index values are grouped into the second group of PDCCH candidate resources.. Of course, as an alternative, those frequency domain resources of the PDCCH candidate of the second half of the resource element index values are grouped into the first group of PDCCH candidate resources, and those frequency domain resources of the PDCCH candidate of the first half of the resource element index values are grouped into the second group of PDCCH candidate resources.

S120: receiving the first group of PDCCH candidate resources by using one receiving beam of receiving beams corresponding to the active TCI states, and subsequently receiving the second group of PDCCH candidate resources by using another receiving beam of receiving beams corresponding to the active TCI states.

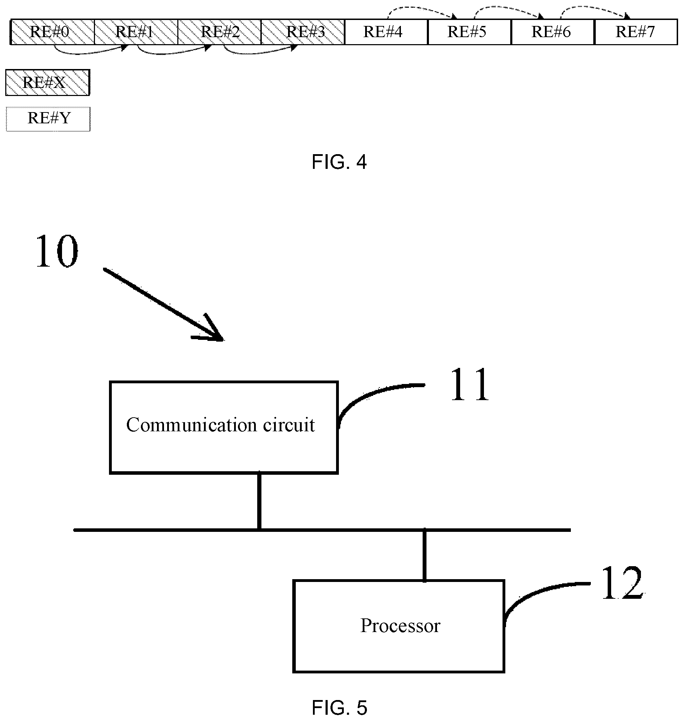

Specifically, the first receiving beam corresponding to one of the active TCI states is used to receive the first group of PDCCH candidate resources, and then the second receiving beam corresponding to the second active TCI state is used to receive the second group of PDCCH candidate resources. For example, as shown in FIG. 3, with the parity-based grouping of the resource element index values, the UE first uses the first receiving beam to monitor on resource elements #0&#2&#4&#6, and then uses the second receiving beam to monitor on resource elements on #1&#3&#5&#7. Alternatively, as shown in FIG. 4, with the size-based grouping of the resource element index values, the UE first uses the first receiving beam to monitor on resource elements #0&#1&#2&#3, and then uses the second receiving beam to monitor on the resource elements #4&#5&#6&#7.

In an embodiment, after the UE receives the PDCCH through the receiving beam corresponding to the TCI state, it may further include: when a scheduling time between the PDCCH and its scheduled physical downlink shared channel (PDSCH) is less than a threshold value, the UE using the receiving beam corresponding to a default TCI state to receive the PDSCH.

Specifically, the threshold value is configured by the high-level parameter timeDurationForQCL. When the scheduling time between the PDCCH and its scheduled PDSCH is less than this threshold value, the PDSCH cannot use the TCI state configured by the PDCCH that schedules the PDSCH, but only can use the parameters corresponding to the default TCI state. When CORESET configures one active TCI state, the default TCI state is the TCI state corresponding to the CORESET with the smallest index value among the CORESETs monitored in the previous time slot. That is, the receiving beam corresponding to the same TCI state is used for the PDCCH and the PDSCH during this time period.

When CORESET configures two active TCI states, the default TCI states can be determined differently in the following situations:
In one embodiment, the TCI state with the smallest index value among the TCI states activated by the CORESET with the smallest index value among the CORESETs monitored in the previous time slot is used as the default TCI state, and the UE uses the receiving beam corresponding to the default TCI state to receive the PDSCH.

In another embodiment, the CORESET may be divided into two groups in the frequency domain according to the index value of the resource element REG/REG bundle/CCE, and each group uses one TCI state for monitoring of the PDCCH candidates. The TCI state corresponding to the resource element with the smallest index value among the resource elements corresponding to the CORESETs monitored in the previous time slot is taken as the default TCI state, and the UE uses the receiving beam corresponding to the default TCI state to receive the PDSCH.

In yet another embodiment, the CORESET may be divided into two groups in the time domain according to the orthogonal frequency division multiplexing (OFDM) symbol index value, and each group uses one TCI state for monitoring of PDCCH candidates. The TCI state corresponding to the OFDM symbol with the smallest index value among the OFDM symbols corresponding to the CORESETs monitored in the previous time slot is taken as the default TCI state, and the UE uses the receiving beam corresponding to the default TCI state to receive the PDSCH.

In other embodiments, when the PDSCHs are sent through two TRPs, the two active TCI states of the CORESET with the smallest index value in the CORESETs monitored in the previous time slot are used as the two default TCI states, and the UE uses two receiving beams corresponding to the two default TCI state respectively receive two PDSCHs of two TRPs.

The present application further provides a user equipment, which is used for performing the above-mentioned method for configuring the TCI state. With reference to FIG. 5, the user equipment 10 includes a processor 12 and a communication circuit 11. The processor 12 is connected to the communication circuit 11, and the processor 12 is configured to execute instructions to implement the above-mentioned method for configuring TCI state.

The processor 12 may also be referred to as a central processing unit (CPU). The processor 12 may be an integrated circuit chip with signal processing capability. The processor 12 may also be a general purpose processor, digital signal processor (DSP), application specific integrated circuit (ASIC), field programmable gate array (FPGA) or other programmable logic device, discrete gate or transistor logic, discrete hardware components. A general purpose processor may be a microprocessor, or the processor 12 may be any conventional processor or the like.

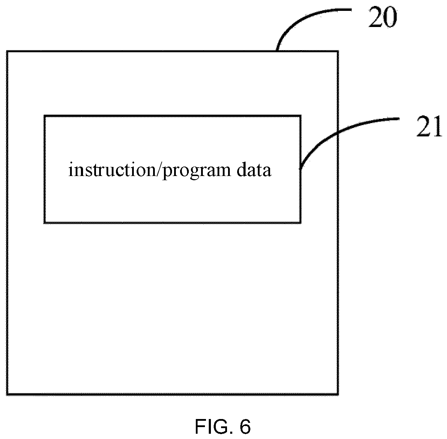

Please refer to FIG. 6. FIG. 6 is a schematic diagram showing a storage structure of a user equipment in an embodiment of the present application. The user equipment 20 in this embodiment of the present application stores the instruction/program data 21, and the instruction/program data 21, when being executed, implements any embodiment of the method for configuring TCI state of the present application and the method provided by any non-conflicting combination. Wherein, the instruction/program data 21 can be stored in the above-mentioned the storage medium of user equipment or the base station 20 in the form of a program file in the form of a software product, so that a computer device (which can be a personal computer, a server, or a network device, etc.) or a processor (processor) executes all or part of the steps of the methods of various embodiments of the present application. The aforementioned storage medium includes universal serial bus (USB) disk, mobile hard disk, read-only memory (ROM), random access memory (RAM), magnetic disk or optical disk and other media that can store program codes, or terminal devices such as computers, servers, mobile phones, and tablets.

In the several embodiments provided in this application, it should be understood that the disclosed system, apparatus and method may be implemented in other manners. For example, the device embodiments described above are only illustrative. For example, the division of units is only a logical function division. In actual implementation, there may be other division methods. For example, multiple units or components may be combined or integrated into another system, or some features can be ignored, or not implemented. On the other hand, the shown or discussed mutual coupling or direct coupling or communication connection may be through some interfaces, indirect coupling or communication connection of devices or units, and may be in electrical, mechanical or other forms.

In addition, each functional unit in each embodiment of the present application may be integrated into one processing unit, or each unit may exist physically alone, or two or more units may be integrated into one unit. The above-mentioned integrated units may be implemented in the form of hardware or may be implemented in the form of software functional units.

The above are only the embodiments of the present application and are not intended to limit the scope of the patent of the present application. Any equivalent structure or equivalent process transformation made by using the contents of the description and drawings of the present application, or directly or indirectly applied in other related technical fields, all are similarly included in the scope of patent protection of the present application.

## Claims

1. A method for configuring a transmission configuration indication, TCI, state in a multitransmission/reception point, TRP, system, comprising:
obtaining a physical downlink control channel, PDCCH, related information according to a monitored search space and a corresponding control resource set, CORESET), wherein the CORESET configures one active TCI state or two active TCI states, and each of the active TCI states includes transmission beam related information parameter;
and a user equipment, UE, receiving a PDCCH through a receiving beam corresponding to the TCI state.

2. The method according to claim 1, **characterized in that** the 1 active TCI state or the 2 active TCI states configured by the CORESET are respectively indicated using different medium access control, MAC, control elements, CEs).

3. The method according to claim 1, **characterized in that** the 1 active TCI state or the 2 active TCI states configured by the CORESET are indicated using the same MAC CE.

4. The method according to claim 1, **characterized in that** when the CORESET configures two of the active TCI states, the UE receiving the PDCCH through the receiving beam corresponding to the TCI states further comprises:
dividing frequency domain resources of a PDCCH candidate into two groups based on resource elements, which are a first group of PDCCH candidate resources and a second group of PDCCH candidate resources;
receiving the first group of PDCCH candidate resources by using one receiving beam of receiving beams corresponding to the active TCI states, and subsequently receiving the second group of PDCCH candidate resources by using another receiving beam of receiving beams corresponding to the active TCI states.

5. The method according to claim 4, **characterized in that** the dividing the frequency domain resources of the PDCCH candidate into two groups based on resource elements, which are the first group of PDCCH candidate resources and the second group of PDCCH candidate resources, further comprises:
dividing the frequency domain resources of the PDCCH candidate into two groups according to parity of resource element index values, wherein those frequency domain resources of the PDCCH candidate with odd-numbered resource element index values are grouped into the first group of PDCCH candidate resources, and those frequency domain resources of the PDCCH candidate with even-numbered resource element index values are grouped into the second group of PDCCH candidate resources; or
dividing the frequency domain resources of the PDCCH candidate into two groups according to a size of the resource element index values, wherein those frequency domain resources of the PDCCH candidate of a first half of the resource element index values are grouped into the first group of PDCCH candidate resources, and those frequency domain resources of the PDCCH candidate of a second half of the resource element index values are grouped into the second group of PDCCH candidate resources.

6. The method according to claim 1, **characterized in that** after the UE receiving the PDCCH through the receiving beam corresponding to the TCI state, the method further comprises:
the UE, when a scheduling time between the PDCCH and its scheduled physical downlink shared channel, PDSCH, is less than a threshold value, using the receiving beam corresponding to a default TCI state to receive the PDSCH.

7. The method according to claim 6, **characterized in that** the UE using the receiving beam corresponding to the default TCI state to receive the PDSCH further comprises:
using, as the default TCI state, a TCI state with the smallest index value among the two active TCI states of the CORESET with the smallest index value in CORESETs monitored in a previous time slot, and
the UE using the receiving beam corresponding to the default TCI state to receive the PDSCH.

8. The method according to claim 6, **characterized in that** the UE using the receiving beam corresponding to the default TCI state to receive the PDSCH further comprises:
using, as the default TCI state, a TCI state corresponding to a resource element with the smallest resource element index value of CORESETs monitored in a previous time slot; and
the UE using the receiving beam corresponding to the default TCI state to receive the PDSCH.

9. The method according to claim 6, **characterized in that characterized in that** the UE using the receiving beam corresponding to the default TCI state to receive the PDSCH further comprises:
using, as the default TCI state, a TCI state corresponding to an orthogonal frequency division multiplexing, OFDM, symbol with the smallest OFDM symbol index value in a time domain of CORESETs monitored in a previous time slot; and
the UE using the receiving beam corresponding to the default TCI state to receive the PDSCH.

10. The method according to claim 1, **characterized in that**, the UE using the receiving beam corresponding to the default TCI state to receive the PDSCH further comprises:
using the two active TCI states of a CORESET with the smallest index value as two default TCI states when the PDSCH is sent through two TRPs; and
the UE using two receiving beams corresponding the two default TCI states to respectively receive two PDSCHs of the two TRPs.

11. A user equipment comprising a processor and a communication circuit, **characterized in that** the processor is connected to the communication circuit;
the processor is configured to execute the method for configuring TCI state according to any one of the preceding claims 1-10.

12. A user equipment storing instructions, **characterized in that** the instructions, when being executed, implement the method for configuring TCI state according to any one of claims 1-10.
